# EUROPEAN PATENT SPECIFICATION

(11) **EP 4 094 849 B1**
(45) Date of publication and mention of the grant of the patent: **19.03.2025**
(21) Application number: 22175305.6
(22) Date of filing: 25.05.2022
(51) Int. Cl.: B06B 1/04, G10K 9/13, H02K 33/16, H04R 7/12, H04R 11/02, H04R 7/18

(54) **ELECTROMECHANICAL TRANSDUCER FOR GENERATING VIBRATIONS TO BE TRANSMITTED TO AN EXTERNAL MOUNTING WALL**
ELEKTROMECHANISCHER WANDLER ZUM ERZEUGEN VON SCHWINGUNGEN, DIE AUF EINE EXTERNE MONTAGEWAND ÜBERTRAGEN WERDEN
TRANSDUCTEUR ÉLECTROMÉCANIQUE DE GÉNÉRATION DE VIBRATIONS À TRANSMETTRE À UNE PAROI DE MONTAGE EXTERNE

(30) Priority: 27.05.2021 IT 202100013826
(43) Date of publication of application: 30.11.2022
(73) Proprietor: Ask Industries Societa' per Azioni, 60037 Monte San Vito (AN) (IT)
(72) Inventor: MASSINI, Pietro, 60129 Ancona (IT); FALCIONI, Andrea, 60019 Senigallia (IT); VIOLI, Francesco, 42049 Sant'Ilario d'Enza (IT); GRAMACCIA, Gaspare, 60020 Agugliano (IT)
(74) Representative: De Santis, Giovanni

(56) References cited:
- WO-A1-2020/045470
- WO-A1-2020/175610
- KR-A- 20170 075 249
- US-A- 5 861 686
- US-A1- 2011 193 426
- US-A1- 2012 170 795
- US-A1- 2015 296 280
- US-A1- 2019 215 603
- US-B1- 6 385 327

## Description

This invention relates to an electromechanical transducer for generating vibrations to be transmitted to an external mounting wall of the transducer itself.

As is known, the use of electromechanical transducers configured to generate and transmit vibrations to the surface of a body on which they are mounted has become more and more common in recent years.

Such electromechanical transducers, also known in the field as exciters or agitators, or as shakers, are used, for example, to cause an associated body to vibrate so as to generate sounds.

To this end, shakers comprise, *inter alia,* a vibration generating assembly including a coil, the windings of which have a suitable electrical power supply, and a magnetic circuit functionally associated with the coil, which is configured so as to move along a reference axis relative to the coil, such that, as a whole, the motion is transferred to the surface to be vibrated.

One essential aspect for the proper operation of a shaker is that it must be ensured that, during the useful life of the shaker, the vibration generation assembly operates with the greatest possible precision, and, in particular, that the magnetic circuit remains aligned with the coil and centered in the desired position, and continues to move with the greatest possible precision along the reference axis, thus avoiding, for example, the generation of undesired noise.

To address this issue, various solutions have been developed over the years that use centring elements, commonly one or two of them, associated with the vibration generation assembly.

Such centring elements, which, in practice, behave like springs, are configured so as to permit axial movement of the magnetic circuit, requiring it to move with the greatest possible precision along the reference axis; as such, they commonly comprise a component that is meant to be rigidly affixed to the body of the shaker, a component connected to the magnetic circuit, and a part that deforms elastically so as to ensure adequate useful movement of the magnetic circuit.

At present, the solutions used for the centring elements, in particular their attachment to the associated parts of the magnetic circuit, leave room for improvement in certain respects.

For example, a typical solution provides for a centring element to be affixed by means of a plurality of mounting screws or rivets, as shown, e.g., in patent document KR 20170075249 A.

This solution results in concentrating the mechanical stresses on the points of attachment, which may result in breakage or mechanical failure.

Moreover, from the design standpoint, this solution is not optimal given the need to first drill holes in various parts of the components to be connected to one another, and then to form the respective attachments.

An alternative solution provides for the necessary attachments to be produced by bonding.

This solution also has limited reliability, and may result in undesired failure of the bonds, due, e.g., to the continuous mechanical stresses to which the bonded parts are exposed during their useful life, the variability of operating temperatures, etc.

US 2015/296280 A1 discloses a bass shaker system that includes a motor and a motor housing, where the motor includes a motor case having first and second members shaped to tightly envelop an exterior surface of a voice coil while leaving a gap between adjacent ends of the first and second members, and a plurality of spiders having at least four spider legs secured within a ring that has an interior shoulder to mate with a radial ridge on each of the first and second motor case members.

US 5,861,686 A discloses an integrated device which comprises first and second vibration members which are set in a ring case and respectively generate waking vibrations and waking sounds. The second vibration member is made of a synthetic resin film, with two inner terminals connected to both ends of a coil. A lead panel integrally extends from the edge of the second vibration member, thus being exposed to the outside of the device. Two outer terminals are provided on the outside end of the lead panel and are connected to the inner terminals through copper wires, thus connecting the coil to a PCB.

Thus, the object of this invention is to provide a solution that addresses these issues and at least partially eliminates the aforementioned inconveniences.

In particular, within this object, a task of the present invention is to provide a solution with increased reliability compared with known solutions, in particular with regard to the mechanical connection between at least one centring element and the associated component of the magnetic circuit, whilst simultaneously ensuring that these components perform to an appropriate standard.

Another task of this invention is to provide a solution in which the mechanical connection between at least one centring element and the associated component of the magnetic circuit is simplified compared to known-art solutions, and is both easier to establish and with relatively limited costs.

This object, as well as the other tasks set forth above and others that will become clearer from the following description, is attained by an electromechanical transducer according to claim 1.

Particular embodiments form the object of the dependent claims whose content has to be intended as an integral part of the present description.

Other characteristics and advantages of the invention will become apparent from the following detailed description, which is provided by way of example only and without limitation, by reference the attached drawings, which show:
Fig. 1 is an exploded view of the electromechanical transducer according to the present invention;
Fig. 2 is a cross-section view illustrating the electromechanical transducer of fig. 1 connected to a mounting wall to be put under vibration;
Fig. 3 is a view of a possible embodiment of a first centring element used in the electromechanical transducer of fig. 1
Fig. 4 is a view of a possible embodiment of a second centring element used in the electromechanical transducer of fig. 1

It should be noted that, in the following detailed description, components that are identical or similar from a structural and/or functional standpoint may have the same or different reference numbers, independently of whether they are shown in different embodiments of the present invention or in different parts.

It should further be noted that, in order to provide a clear and concise description of this invention, the drawings may not necessarily be to scale, and some characteristics of the description may be shown schematically.

Moreover, when the term "adapted" or "arranged" or "configured" or "shaped", or "set", or any similar term is used herein while referring to any component as a whole, or to any part of a component, or to a combination of components, it has to be understood that it means and encompasses correspondingly either the structure, and/or configuration and/or form and/or positioning.

In addition, when the term "about" or "substantial" or "substantially" is used herein, it has to be understood as encompassing an actual variation of plus or minus 5% with respect to what indicated as a reference value, position or axis, and when the terms transversal or transversally are hereby used, they have to be understood as encompassing a direction non-parallel to the reference part(s) or direction(s)/axis they refer to, and perpendicularity has to be considered a specific case of transverse direction.

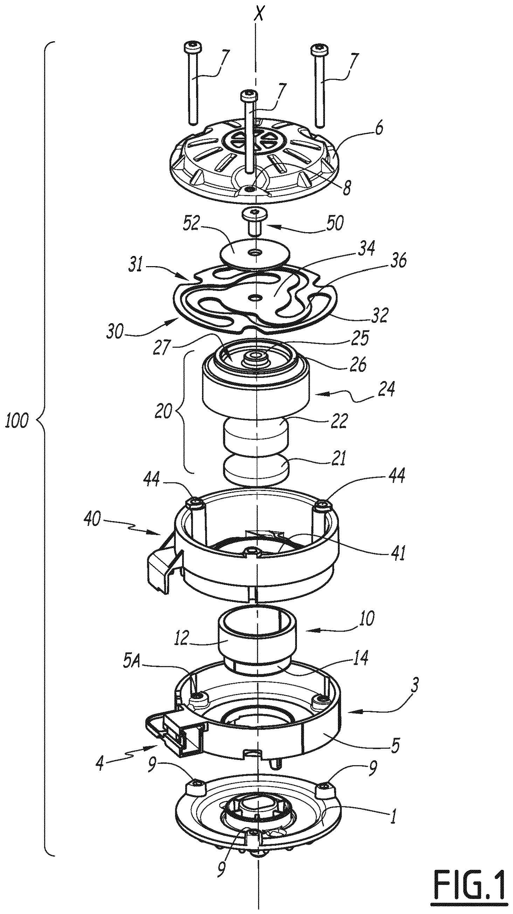

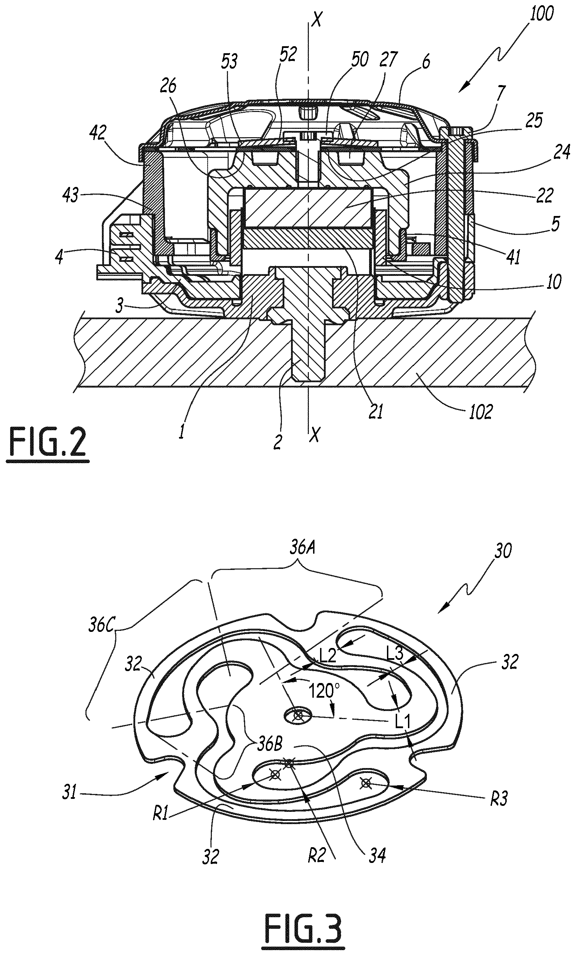

Figures 1 and 2 show an electromechanical transducer according to the invention, indicated as a whole by the reference number 100, and in the following indicated also as 'shaker', shown in an exploded view of the components and with the assembled components shown in cross-section, respectively.

As a whole, the electromechanical transducer or shaker 100 comprises a housing that is formed by assembling a plurality of components, i.e. two or more, some of which, as will be discussed in greater detail hereinafter, are configured to carry out other functions in addition to that of being components of the housing.

Amongst these components, the housing of the shaker 100 according to the invention comprises at least one base 1, e.g. in the form of a substantially rigid plate, which is suitable to be solidly connected to a mounting wall by means of attachment means, e.g. a screw 2.

The mounting wall, represented schematically in figure 2 by reference number 102, is intended to be put under vibrations by the shaker 100, and is part of any device with which the shaker 100 is coupled; this device may be, by way of example and without limitation, a panel, a tailgate of an automobile to be vibrated in order to transmit sounds within the passenger compartment, part of a seat, or an element connected to a seat in an automobile, etc.

The housing contains a plurality of components, in particular a magnetodynamic assembly comprising a coil 10, the windings of which (not shown in the drawings for clarity of illustration) are suitable to be supplied with electricity, and a magnetic circuit, indicated in figure 1 by the overall reference number 20, which is operatively associated with the coil 10, which circuit is arranged within the housing of the transducer 100 so as to move axially along a reference axis X (in both directions) by virtue of the electromagnetic forces generated by supplying the coil 10 with power.

In particular, as shown in figure 1, the coil 10 comprises for example a first cylindrical portion 12 around which the aforementioned windings are wound, and a second cylindrical portion 14 that is concentric with and extends downward from the first cylindrical portion 12.

In its turn, the mobile magnetic circuit 20 comprises a lower polar element 21, for example disc-shaped, an upper polar element 24, for example cup-shaped, and a magnet 22 positioned between the upper 24 and lower 21 polar elements.

In particular, the upper polar element 24 comprises, on its upper surface, a first upper wall 25, which is positioned in a substantially central position, and a second upper wall 26, which extends along the peripheral edge of the upper surface itself.

Advantageously, the upper polar element 24 further comprises a groove or recessed area 27 which is provided between the central part where there is defined the first upper wall 25 and the peripheral part where there is defined the second upper wall 26.

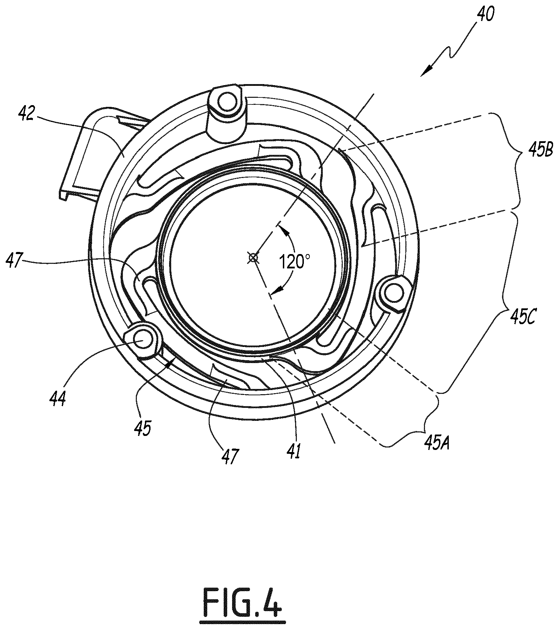

The electromechanical transducer 100 according to the invention further comprises at least:
- a first centring element 30, shown in detail in fig. 3, which is suitable to be connected to the magnetic circuit 20, and in particular to be fixed onto the first upper wall 25 of the upper polar element 24;
- a second centring element 40, shown in detail in fig. 4, suitable to be connected to the magnetic circuit 20, and, in particular, to a lower surface of the upper polar element 24 itself, as shown in fig. 2;
- attachment means, advantageously comprising a single mounting screw 50 or equivalent element, and an elastically deformable element 52 having a body with a slight contour in the shape of a dome, such as a cupola, or cup, or cone, which are suitable to allow fixing the first centring element 30 to the first upper wall 25 of the upper polar element 24 as described in greater detail in the following.

This elastically deformable element consists for example of a cup spring.

In the embodiment shown, the transducer 100 comprises a housing 3, which is also substantially cylindrical, the body of which is arranged about an axis that, when the transducer is assembled, coincides with the reference axis X, and is configured so as to have at least one shaped portion 4 suitable for housing a connector (not shown) to connecting to the power supply of the windings of the coil 10, and a peripheral ring 5, the walls of which contribute to forming the housing of the transducer 100 itself. Additionally, at the peripheral ring 5, in particular inside it, there are provided through seats 5A, for example three.

The transducer 100 further comprises:
- an upper cover 6;
- a plurality of mounting screws or fastening tie rods 7, for example three in the embodiment shown, which are suitable to be inserted into holes 8 provided in the cover 6 and arranged peripherally along the longitudinal development of the transducer 100, and to be screwed into threaded seats 9 provided in the base 1 so as to assembly and connect them as a whole.

Usefully, in the transducer 100 according to the invention, as shown in greater detail in figure 3, the first centring element 30, which may be considered functionally as a spring, comprises a one-piece shaped body that is circular as a whole and extends on a transverse plane, and in particular substantially perpendicular, to the reference axis X, and has at least one peripheral portion 32 suitable to be rigidly connected to the housing of the transducer 100, at least one central portion 34 suitable to be rigidly fixed to the first upper wall 25 of the upper polar element 24, and at least one elastically deformable intermediate portion 36 that is arranged between and mechanically interconnects to each other the peripheral 32 and central 34 portions.

In particular, the central portion 34 is substantially circular in shape relative to the reference axis X, and, at its centre, comprises a through hole 35 suited to allow the passage of the mounting screw 50.

In its turn, the at least one peripheral portion 32 comprises three circular sections that are substantially identical to one another and indicated by the same reference number 32; between each pair of adjacent peripheral sections 32, an inlet 31 is provided, through which a corresponding mounting screw or rod 7 passes.

Advantageously, the at least one elastically deformable intermediate portion 36 comprises three arms that are substantially identical to one another and are indicated by the same reference number 36.

In particular, each arm 36 has a curvilinear course and comprises an initial curvilinear portion 36A that extends from an outer edge of the central portion 34, a final curvilinear portion 36B that joins with two adjacent peripheral sections 32 in the area in which the respective inlet 31 is provided between them, and a central portion 36C, also curvilinear, which joints the respective initial and final portions 36A and 36B.

In particular, as shown in figure 3, and illustrated for the sake of simplicity solely for a pair of arms 36, the three arms 36 are arranged equidistantly to one another at an angle of approximately 120°, for example by considering for each of them the conjunction between the respective midpoint of the respective initial portion 36A with the central of the through hole 35.

Advantageously, at least one of the initial 36A and final portions 36B, preferably both of them, has an average curvature radius R1 and R3, respectively, that is less than the average curvature radius R2 of the central portion 36C.

As shown in figure 3, the average curvature radius R3 is measured in correspondence of the edge of the final portion 36B which faces the respective adjacent peripheral section 32, whilst the average curvature radii R1 and R2 are measured, for instance relative to the curvilinear inner edge of the respective arm, namely the edge that faces the central portion 34, or they may all be measured by reference to the midlines of each portion.

In particular, the ratio between the diameter of the first centring element 30 (i.e. twice the distance between the centre of the first centring element 30 itself and the outer edge of any of the outer peripheral sections 32) and the average curvature radius R3 of the final portion 36B is advantageously between 10 and 20.

Moreover, on the plane of the first centring element 30, the average width, L1 and respectively L2, of both the initial 36A and final portions 36B is greater than the average width L3 of the central portion 36C.

Preferably, the first centring element 30 is made of a metallic material.

In its turn, as shown in figures 1 and 4, the second centring element comprises a one-piece shaped body which includes an inner portion 41, e.g. in the shape of a circular inner ring which extends about an axis that, when assembled, coincides substantially with the reference axis X; this circular ring 41 has a substantially L-shaped cross-section, as can be seen in fig. 2, which constitutes a support area for the lower portion of the upper polar element 24.

Moreover, the second centring element 40 includes an outer portion 42, e.g. substantially cylindrical in shape, extending around the same axis as the inner circular ring 41, and whose walls have a cross-section forming a step 43 abutting the upper part of the housing 3.

The upper part of the walls of the outer portion 42 contributes to the formation of the housing of the transducer 100 itself, whilst the lower part is inserted into the housing 3.

Along the walls of the outer portion 42, there are provided through holes 44, inside which the through screws/passing tie rods 7 are inserted.

Advantageously, the body of the second centring element 40 also comprises an elastically deformable intermediate portion 45 that interconnects the inner portion 41 with the outer portion 43.

Advantageously, the at least one elastically deformable intermediate portion 45 comprises three arms that are substantially identical to one another and are indicated by the same reference number 45.

In particular, as shown in greater detail in figure 4 only for a single arm for clarity's sake, each arm 45 has a curvilinear course and comprises a curvilinear initial portion 45A that extends from an outer edge of the central portion 41, a curvilinear final portion 45B that joins with the wall of the outer portion 42, and a central portion 34C, which is also curvilinear, and joins the respective initial and final portions 45A, 45B.

Conveniently, the three arms 45 are arranged at a distance of approximately 120° from one another, for example by considering for each of them the conjunction of the midpoint of the respective initial portion 45A with the centre of the ring 41, as shown schematically in figure 4.

In particular, the initial portion 45A and the final portion 45B of each arm 45 comprise a part, indicated by the same reference number 47, with a thickness measured in the direction of the reference axis X that is greater than that of the central portion 44C.

Preferably, the second centring element 40 is made of a plastic material.

During assembly, as shown for instance in fig. 2, the coil 10 is arranged with its axis (coinciding with the axis of its coaxial cylindrical portions 12 and 14) substantially aligned with the reference axis X, and is fixed at the bottom to the base 1, in particular by gluing the inner surface of the second cylindrical portion 14 to the base 1; moreover, the outer surface of the second cylindrical portion 14 is fixed, in particular glued, to the housing 3, which is resting on and glued to the base 1 with the walls of the peripheral ring 5 contributing in the formation of the housing of the transducer 100 itself.

The lower polar element 21, for example disk-shaped, is housed, together with at least one portion of the magnet 22, within the cylindrical body of the coil 10, whilst the upper polar element 24 is arranged outside the cylindrical body of the coil 10.

In particular, in the embodiment shown, the cup-shaped body of the polar element 24 is seated around the coil 10, with its cavity facing downward, so as to form the necessary air gap.

The second centring element 40 is arranged with its axis substantially coinciding with the reference axis X, and is coupled with the lower surface of the second polar element 24, e.g. by gluing its annular inner portion 41 around the lower portion of the upper magnet 24 itself.

In this position, the step 43 of the outer portion 42 abuts the upper portion of the housing 3, and the upper portion of the walls of the outer portion 42 itself contribute to the formation of the housing of the transducer 100 itself, whilst the lower part is inserted within the walls of the peripheral ring 5.

Advantageously, the first centring element 30 is fixed to the first upper wall 25 of the upper polar element 24 by means of the mounting screw 50, with the elastically deformable element 52 arranged between the screw 50 itself and the surface of the first upper wall 25.

In practice, when fixing the screw 50 to the upper polar element 24, the elastically deformable body 52, which is positioned with its concave side facing the central portion 34 of the first centring element 30, deforms, and tends to flatten against it.

In this manner, at least one circular peripheral portion 53 of the element 52 tightly abuts and presses on a corresponding peripheral circular surface of the central portion 34; in its turn, this peripheral circular surface of the central portion 34 rests on and is pressed against the surface of the second upper wall 26.

Thus, in the transducer 100 according to the invention, the first centring element 30 is fixed to the magnetic circuit 20, and in particular to the upper polar element 24, by means of a single mounting screw 50 that is positioned along the reference axis X, with the deformable element 52, and, in particular, its circular outer peripheral edge 53 substantially uniformly distributing the fixing pressure along its surface and, from there, to the corresponding peripheral circular surface of the central portion 34 on which it is pressing. The contact and the substantially uniform distribution of the pressure exerted by the circular peripheral portion 53 onto the corresponding circular peripheral portion of the central portion 34, which is discharged from this against the surface of the second upper wall 26, are usefully favoured and rendered more effective thanks to the presence of the groove or recessed area 27 which extends between the inner part of the central portion 34, i.e. that positioned around the through hole 35 which rests on the surface of the first upper wall 25, and the peripheral circular surface of the central portion 34 which rests on and is pressed against the surface of the second upper wall 27.

The peripheral portion 32 of the first centring element 30 is inserted between the upper portion of the outer portion 42 and the cover 6, and firmly held therein; if needed, it is also possible to use an adhesive layer to bond the parts held between them.

The screws or fixing tie rods 7 are thus inserted into the holes 8 of the cover 6, pass through the inlets 31, the through hole seats 44 and 5A provided on the second centring element 40 and the housing 3, and are then screwed into the seats 9 provided in the base 1 so as to assemble and fix the various parts as a whole assembly.

In practice, it has been found that the electromechanical transducer 100 according to the invention achieve the scope and tasks set since the connection between the centring elements 30 and 40 and the magnetic circuit 20 is realized, in a manner as a whole simpler than in the known solutions. In particular, the first centring element 30 is fixed to the mobile magnetic circuit 20 according to a solution that is simple form a construction point of view and allows for a better distribution of both the magnetic fields at work and the mechanical stresses, ensuring a greater reliability.

Moreover, the particular configuration of the first centring element 30, which, as indicated, acts as a spring for all intents and purposes, provides an optimal elastic constant and adequately balances the need for mobility with resistance to mechanical stresses.

To this end, the configuration of the second centring element 40 also allows for an adequate balance between these needs.

In addition, the specific choice of materials, i.e. the combination of a metallic material for the first centring element 30 and a plastic material for the second centring element 40, allows for a good balance between the necessary damping of movement between moving parts and the necessary mechanical performance at the various operating temperatures, and allows to be produced economically. In particular, the first centring element 30 may advantageously be obtained from a simple flat metal sheet, according to a solution simple and cheap.

Of course, without prejudice to the principle of the invention, the embodiments and specific implementations may be widely varied from the purely exemplary descriptions and illustrations herein, which are preferred, but do not constitute limitations, without departing from the scope of this invention as defined in particular in the claims appended hereto. For example, some of the components above described and/or one or more of their parts may be configured differently with respect to the configurations described herein, as long as they remain compatible with the purposes and functions provided by this invention; the number of fixing screws or tie rods 7 and the respective through hole seats and points of attachment may be different, or different attachment solutions may be used; the magnetic circuit 20 may be made of a different number of parts, e.g. with one or more of the components 21, 22, and 24 above described being made of two or more parts; each of the parts of the magnetic circuit 20 may be shaped and/or positioned differently to the shapes and/or positions described in the exemplary embodiment. For example, the magnetic circuit 20 may comprise a ring magnet arranged around the body of the coil, the upper polar element 24 may be made using a T-shaped magnetic yoke, and the lower polar element 21 may consist of a polar plate arranged beneath the coil. The housing may be made of a different number of parts and/or configured differently, e.g. with its lateral surfaces not necessarily completely closed, etc.

## Claims

1. Electromechanical transducer (100) suitable for generating vibrations to be transmitted to an external mounting wall (102), comprising:
- a housing which includes a base (1) suitable to be solidly connected to said external mounting wall (102); and, arranged inside said housing at least:
- a coil (10) which is fixed to at least said base (1) and devised to be electrically powered;
- a magnetic circuit (20) which is movable along a virtual reference axis (X) and comprises at least a lower polar element (21), an upper polar element (24), and a magnet (22) interposed between said lower and upper polar elements (21, 24);
- at least a first centering element (30) comprising at least a peripheral portion (32) constrained to said housing, a central portion (34), and at least an elastically deformable intermediate portion (36) which is arranged between and interconnects said peripheral and central portions (32, 34);
- a fastening means (50) which is arranged along said reference axis (X) and is fixed to the upper polar element (24) thereby fixing solidly said central portion (34) to an upper surface of a first upper wall (25) of the upper polar element (24); and
- an elastically deformable element (52) having a dome-shaped body which is positioned between said central portion (34) and said fastening means (50) with its own concavity facing towards said central portion (34), and wherein, following the fixing of said central portion (34) to the surface of the first upper wall (25) by means of said fastening means (50), the elastically deformable element (52) deforms at least partially with at least one peripheral circular (53) portion thereof which rests on pressing against a corresponding circular surface of the central portion (34), **characterised in that:**
said upper polar element (24) comprises a cup-shaped body which includes, at a substantially central portion, said first upper wall (25), a second upper wall (26), which extends along the peripheral edge of the cup-shaped body, and a recessed area (27) which is provided between the first upper wall (25) and the second upper wall (26), and wherein, following the fixing of said central portion (34) to the upper surface of the first upper wall (25) by means of said fastening means (50), said at least one peripheral circular (53) portion rests on pressing against a corresponding circular surface of the central portion (34) which in turn rests on and is pressed against an upper surface of said second upper wall (26).

2. Electromechanical transducer (100) according to claim 1, wherein said elastically deformable element (52) comprises a cup spring.

3. Electromechanical transducer (100) according to one or more of the previous claims, wherein said elastically deformable intermediate portion (36) comprises three arms (36) substantially identical to each other which protrude from the central portion (34) substantially equidistant from each other.

4. Electromechanical transducer (100) according to claim 3, wherein each arm (36) has a curvilinear course and comprises an initial curvilinear portion (36A) which extends from an outer edge of the central portion (34), a final curvilinear portion (36B) which is joined to the peripheral portion (32), and a central curvilinear portion (36C) which joins together said initial and final curvilinear portions (36A, 36B).

5. Electromechanical transducer (100) according to claim 4, wherein at least one of said initial and final curvilinear portions (36A, 36B) has an average radius of curvature (R1, R3) smaller than the average radius of curvature (R2) of the portion central curvilinear (36C).

6. Electromechanical transducer (100) according to one or more of claims 4 and 5, wherein at least one of said initial and final curvilinear portions (36A, 36B) has an average width (L1, L2) greater than the average width (L3) of the central curvilinear portion (36C).

7. Electromechanical transducer (100) according to one or more of the preceding claims, wherein said first centering element (30) is realized in a single body made of metallic material.

8. Electromechanical transducer (100) according to one or more of the preceding claims, further comprising a second centering element (40), connected at least to a lower surface of said upper polar element (24), said second centering element (40) comprising an inner portion (41) shaped as a circular ring, an outer portion (42) of a substantially cylindrical shape whose upper part forms part of the housing, and at least one elastically deformable intermediate portion (45) which interconnects the inner portion (41) with the outer portion (42) and comprises three arms (45) with a curvilinear course substantially identical to each other.

9. Electromechanical transducer (100) according to claim 8, wherein each of said three arms (45) of the second centering element (40) comprises an initial curvilinear portion (45A) which extends from an outer edge of the central portion (41), a final curvilinear portion (45B) which is joined to the wall of the outer portion (42), and a central curvilinear portion (34C) which joins together the respective initial and final portions (45A, 45B).

10. Electromechanical transducer (100) according to one or more of claims 8 and 9, wherein said second centering element (40) is realized in a single piece of plastic material.

## Patentansprüche

1. Elektromechanischer Wandler (100), der zum Erzeugen von Schwingungen geeignet ist, die auf eine externe Montagewand (102) übertragen werden sollen, umfassend:
- ein Gehäuse, das eine Basis (1) beinhaltet, der geeignet ist, um fest mit der äußeren Montagewand (102) verbunden zu werden, und wobei in dem Gehäuse zumindest Folgendes angeordnet ist:
- eine Spule (10), die zumindest an der Basis (1) befestigt ist und dazu vorgesehen ist, elektrisch betrieben zu werden;
- einen Magnetkreis (20), der entlang einer virtuellen Referenzachse (X) bewegbar ist und zumindest ein unteres polares Element (21), ein oberes polares Element (24) und einen Magneten (22), der zwischen das untere und das obere polare Element (21, 24) eingefügt ist, umfasst;
- zumindest ein erstes Zentrierelement (30), umfassend zumindest einen an dem Gehäuse befestigten peripheren Abschnitt (32), einen mittleren Abschnitt (34) und zumindest einen elastisch verformbaren Zwischenabschnitt (36), der zwischen dem peripheren und mittleren Abschnitt (32, 34) angeordnet ist und diese miteinander verbindet;
- eine Befestigungseinrichtung (50), die entlang der Bezugsachse (X) angeordnet und an dem oberen polaren Element (24) befestigt ist, wodurch der mittlere Abschnitt (34) fest an einer oberen Fläche einer ersten oberen Wand (25) des oberen polaren Elements (24) befestigt ist; und
- ein elastisch verformbares Element (52), das einen kuppelförmigen Körper aufweist, das zwischen dem mittleren Abschnitt (34) und der Befestigungseinrichtung (50) angeordnet ist, wobei seine eigene Konkavität dem mittleren Abschnitt (34) zugewandt ist, und wobei sich das elastisch verformbare Element (52) nach Befestigen des mittleren Abschnitts (34) an der Oberfläche der ersten oberen Wand (25) mittels der Befestigungseinrichtung (50) zumindest teilweise mit mindestens einem kreisförmigen peripheren Abschnitt (53) verformt, der auf einer entsprechenden kreisförmigen Fläche des mittleren Abschnitts (34) aufliegt, **dadurch gekennzeichnet, dass** das obere polare Element (24) einen becherförmigen Körper umfasst, der an einem im Wesentlichen mittleren Abschnitt die erste obere Wand (25), eine zweite obere Wand (26), die sich entlang des Umfangsrandes des becherförmigen Körpers erstreckt, und einen ausgesparten Bereich (27), der zwischen der ersten oberen Wand (25) und der zweiten oberen Wand (26) bereitgestellt ist, beinhaltet, und wobei der mindestens eine kreisförmige Umfangsabschnitt (53) nach Befestigen des mittleren Abschnitts (34) an der oberen Fläche der ersten oberen Wand (25) mittels der Befestigungseinrichtung (50) auf einer entsprechenden kreisförmigen Fläche des mittleren Abschnitts (34) aufliegt, die ihrerseits auf einer oberen Fläche der zweiten oberen Wand (26) aufliegt und dagegen gedrückt wird.

2. Elektromechanischer Wandler (100) nach Anspruch 1, wobei das elastisch verformbare Element (52) eine Tellerfeder umfasst.

3. Elektromechanischer Wandler (100) nach einem oder mehreren der vorherigen Ansprüche, wobei der elastisch verformbare Zwischenabschnitt (36) drei im Wesentlichen identische Arme (36) umfasst, die im Wesentlichen in gleichem Abstand voneinander aus dem mittleren Abschnitt (34) hervorstehen.

4. Elektromechanischer Wandler (100) nach Anspruch 3, wobei jeder Arm (36) einen krummlinigen Verlauf aufweist und einen anfänglichen krummlinigen Abschnitt (36A), der sich von einer äußeren Rand des mittleren Abschnitts (34) erstreckt, einen endgültigen krummlinigen Abschnitt (36B), der mit dem peripheren Abschnitt (32) verbunden ist, und einen mittleren krummlinigen Abschnitt (36C), der den anfänglichen und den endgültigen krummlinigen Abschnitt (36A, 36B) miteinander verbindet, umfasst.

5. Elektromechanischer Wandler (100) nach Anspruch 4, wobei zumindest einer von dem anfänglichen und endgültigen krummlinigen Abschnitt (36A, 36B) einen durchschnittlichen Krümmungsradius (R1, R3) aufweist, der kleiner ist als der durchschnittliche Krümmungsradius (R2) des mittleren krummlinigen Abschnitts (36C).

6. Elektromechanischer Wandler (100) nach einem oder mehreren der Ansprüche 4 und 5, wobei zumindest einer von dem anfänglichen und endgültigen krummlinigen Abschnitt (36A, 36B) eine durchschnittliche Breite (L1, L2) aufweist, die größer ist als die durchschnittliche Breite (L3) des mittleren krummlinigen Abschnitts (36C).

7. Elektromechanischer Wandler (100) nach einem oder mehreren der vorherigen Ansprüche, wobei das erste Zentrierelement (30) in einem einzigen Körper aus metallischem Material ausgeführt ist.

8. Elektromechanischer Wandler (100) nach einem oder mehreren der vorherigen Ansprüche, ferner umfassend ein zweites Zentrierelement (40), das zumindest mit einer unteren Fläche des oberen polaren Elements (24) verbunden ist, das zweite Zentrierelement (40) umfassend einen inneren Abschnitt (41), der als Kreisring geformt ist, einen äußeren Abschnitt (42) von im Wesentlichen zylindrischer Form, dessen oberer Teil einen Teil des Gehäuses bildet, und zumindest einen elastisch verformbaren Zwischenabschnitt (45), der den inneren Abschnitt (41) mit dem äußeren Abschnitt (42) verbindet und drei Arme (45) mit einem im Wesentlichen identischen krummlinigen Verlauf untereinander umfasst.

9. Elektromechanischer Wandler (100) nach Anspruch 8, wobei jeder der drei Arme (45) des zweiten Zentrierelements (40) einen anfänglichen krummlinigen Abschnitt (45A), der sich von einem äußeren Rand des mittleren Abschnitts (41) erstreckt, einen abschließenden krummlinigen Abschnitt (45B), der mit der Wand des äußeren Abschnitts (42) verbunden ist, und einen mittleren krummlinigen Abschnitt (34C), der den jeweiligen anfänglichen und endgültigen Abschnitt (45A, 45B) miteinander verbindet, umfasst.

10. Elektromechanischer Wandler (100) nach einem oder mehreren der Ansprüche 8 und 9, wobei das zweite Zentrierelement (40) in einem einzigen Stück aus Kunststoffmaterial ausgeführt ist.

## Revendications

1. Transducteur électromécanique (100) approprié pour générer des vibrations à transmettre à une paroi de montage externe (102), comprenant :
- un boîtier comprenant une base (1) apte à être reliée de manière solide à ladite paroi de montage externe (102) ; et, disposée dans ledit boîtier au moins :
- une bobine (10) fixée au moins à ladite base (1) et conçue pour être alimentée électriquement ;
- un circuit magnétique (20) mobile le long d'un axe de référence virtuel (X) et comprenant au moins un élément polaire inférieur (21), un élément polaire supérieur (24) et un aimant (22) interposé entre lesdits éléments polaires inférieur et supérieur (21, 24) ;
- au moins un premier élément de centrage (30) comprenant au moins une partie périphérique (32) fixée audit boîtier, une partie centrale (34), et au moins une partie intermédiaire (36) élastiquement déformable qui est disposée entre lesdites parties périphérique et centrale (32, 34) et les relie entre elles ;
- un moyen de fixation (50) disposé le long dudit axe de référence (X) et fixé à l'élément polaire supérieur (24), fixant ainsi solidement ladite partie centrale (34) à une surface supérieure d'une première paroi supérieure (25) de l'élément polaire supérieur (24) ; et
- un élément élastiquement déformable (52) dont le corps est en forme de dôme et qui est positionné entre ladite partie centrale (34) et ledit moyen de fixation (50) dont la propre concavité est orientée vers ladite partie centrale (34), et dans lequel, après la fixation de ladite partie centrale (34) à la surface de la première paroi supérieure (25) au moyen dudit moyen de fixation (50), l'élément élastiquement déformable (52) se déforme au moins en partie avec au moins une partie circulaire périphérique (53) qui s'appuie pressant sur une surface circulaire correspondante de la partie centrale (34), **caractérisé en ce que** ledit élément polaire supérieur (24) comprend un corps en forme de coupe qui comprend, dans une partie sensiblement centrale, ladite première paroi supérieure (25), une deuxième paroi supérieure (26), qui s'étend le long du bord périphérique du corps en forme de coupe, et une zone en retrait (27) qui est prévue entre la première paroi supérieure (25) et la deuxième paroi supérieure (26), et dans lequel, après la fixation de ladite partie centrale (34) à la surface supérieure de la première paroi supérieure (25) au moyen desdits moyens de fixation (50), ladite au moins une partie circulaire périphérique (53) s'appuie pressant sur une surface circulaire correspondante de la partie centrale (34) qui, à son tour, s'appuie sur une surface supérieure de ladite deuxième paroi supérieure (26) et est pressée contre elle.

2. Transducteur électromécanique (100) selon la revendication 1, dans lequel l'élément élastiquement déformable (52) comprend une rondelle-ressort.

3. Transducteur électromécanique (100) selon une ou plusieurs des revendications précédentes, dans lequel ladite partie intermédiaire élastiquement déformable (36) comprend trois bras (36) sensiblement identiques l'un à l'autre qui font saillie à partir de la partie centrale (34) sensiblement équidistante l'une de l'autre.

4. Transducteur électromécanique (100) selon la revendication 3, dans lequel chaque bras (36) a une trajectoire curviligne et comprend une partie curviligne initiale (36A) s'étendant à partir d'un bord extérieur de la partie centrale (34), une partie curviligne finale (36B) qui est reliée à la partie périphérique (32), et une partie curviligne centrale (36C) qui relie lesdites parties curvilignes initiales et finales (36A, 36B).

5. Transducteur électromécanique (100) selon la revendication 4, dans lequel au moins une desdites parties curvilignes initiale et finale (36A, 36B) présente un rayon de courbure moyen (R1, R3) inférieur au rayon de courbure moyen (R2) de la partie curviligne centrale (36C).

6. Transducteur électromécanique (100) selon une ou plusieurs des revendications 4 et 5, dans lequel au moins une desdites parties curvilignes initiales et finales (36A, 36B) a une largeur moyenne (L1, L2) supérieure à la largeur moyenne (L3) de la partie curviligne centrale (36C).

7. Transducteur électromécanique (100) selon une ou plusieurs des revendications précédentes, dans lequel ledit premier élément de centrage (30) est réalisé dans un seul corps en matériau métallique.

8. Transducteur électromécanique (100) selon une ou plusieurs des revendications précédentes, comprenant en outre un deuxième élément de centrage (40), relié au moins à une surface inférieure dudit élément polaire supérieur (24), ledit deuxième élément de centrage (40) comprenant une partie intérieure (41) en forme d'anneau circulaire, une partie extérieure (42) de forme sensiblement cylindrique dont la partie supérieure fait partie du boîtier, et au moins une partie intermédiaire élastiquement déformable (45) qui relie la partie intérieure (41) à la partie extérieure (42) et comprend trois bras (45) ayant une trajectoire curviligne sensiblement identique l'une à l'autre.

9. Transducteur électromécanique (100) selon la revendication 8, dans lequel chacun desdits trois bras (45) du deuxième élément de centrage (40) comprend une partie curviligne initiale (45A) qui s'étend à partir d'un bord extérieur de la partie centrale (41), une partie curviligne finale (45B) qui est jointe à la paroi de la partie extérieure (42), et une partie curviligne centrale (34C) qui joint ensemble les parties initiales et finales respectives (45A, 45B).

10. Transducteur électromécanique (100) selon une ou plusieurs des revendications 8 et 9, dans lequel ledit deuxième élément de centrage (40) est réalisé dans une seule pièce de matière plastique.
